(19) Europäisches Patentamt
European Patent Office
Office européen des brevets

(11) **EP 3 047 233 B1**

(12) **EUROPÄISCHE PATENTSCHRIFT**

(45) Veröffentlichungstag und Bekanntmachung des Hinweises auf die Patenterteilung:
**19.05.2021  Patentblatt 2021/20**

(21) Anmeldenummer: **14771287.1**

(22) Anmeldetag: **18.09.2014**

(51) Int Cl.:
*G01C 19/5762* $^{(2012.01)}$  *G01C 19/5776* $^{(2012.01)}$
*G01P 15/125* $^{(2006.01)}$  *G01P 15/13* $^{(2006.01)}$

(86) Internationale Anmeldenummer:
**PCT/EP2014/069886**

(87) Internationale Veröffentlichungsnummer:
**WO 2015/040109 (26.03.2015 Gazette 2015/12)**

(54) **VERFAHREN UND SCHALTUNG ZUR ZEITKONTINUIERLICHEN DETEKTION DER POSITION DER SENSORMASSE BEI GLEICHZEITIGER RÜCKKOPPLUNG FÜR KAPAZITIVE SENSOREN**

METHOD AND CIRCUIT TO CONTINUOUSLY DETECT THE POSITION OF A SENSOR MASS AND SIMULTANEOUSLY PROVIDE FEEDBACK FOR CAPACITIVE SENSORS

PROCÉDÉ ET CIRCUIT DE DÉTECTION EN CONTINU DE LA POSITION DE LA MASSE DU CAPTEUR DANS UNE CONTRE-RÉACTION SIMULTANÉE POUR DES CAPTEURS CAPACITIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2013  DE 102013218973**

(43) Veröffentlichungstag der Anmeldung:
**27.07.2016  Patentblatt 2016/30**

(73) Patentinhaber: **Albert-Ludwigs-Universität Freiburg**
**79098 Freiburg (DE)**

(72) Erfinder:
• **MAURER, Michael**
**79365 Rheinhausen (DE)**
• **NESSLER, Sebastian**
**79194 Gundelfingen (DE)**
• **MANOLI, Yiannos**
**79104 Freiburg (DE)**

(74) Vertreter: **Grünecker Patent- und Rechtsanwälte PartG mbB**
**Leopoldstraße 4**
**80802 München (DE)**

(56) Entgegenhaltungen:
**EP-A1- 2 259 019    DE-A1-102005 046 699**
**US-A1- 2012 076 339**

EP 3 047 233 B1

**Beschreibung**

Die vorliegende Erfindung bezieht sich auf eine Detektionsschaltung zum Auslesen mindestens eines Positionssignals eines mikromechanischen kapazitiven Sensors mit mindestens einem zu einer Schwingbewegung anregbaren Schwingerelement, beispielsweise Beschleunigungssensoren oder Drehratensensoren. Insbesondere bezieht sich die Erfindung auf einen Drehratensensor, der in einer geschlossenen Regelschleife, beispielsweise einer Sigma-Delta Regelschleife, unter Verwendung der erfindungsgemäßen Detektionsschaltung betrieben wird. Die Erfindung bezieht sich außerdem auf ein Verfahren zum Betreiben eines solchen Sensors.

Drehratensensoren werden z. B. in Fahrerassistenzsystemen, bei der Fahrdynamikregelung (Electronic stability program, ESP) und in Navigationssystemen verwendet. Dabei detektieren diese Sensoren Drehraten um eine definierte Achse basierend auf dem Coriolis-Effekt. Der Drehratensensor umfasst zwei Massen, die primäre sowie die sekundäre. Um eine Drehrate mit Hilfe des Coriolis-Effekts detektieren zu können, muss die gesamte Masse in Bewegung versetzt werden. Die primäre Masse, in der die sekundäre Masse aufgehängt ist, wird in eine konstante Schwingung versetzt. Durch eine Rotation des Sensors um seine sensitive Achse wird die sekundäre Masse orthogonal zur primären Achse mit der Coriolis-Kraft $F_c$ ausgelenkt:

$$\vec{F}_c = -2 \cdot m \cdot \vec{\Omega} \times \vec{v}_p \, , \qquad \text{Gl. 1}$$

dabei ist m die Masse, $\Omega$ die Drehrate und $v_p$ die Geschwindigkeit der primären Masse. Die sekundäre Masse ist dabei idealerweise mechanisch so aufgehängt, dass sie sich nur orthogonal zur primären Oszillation auslenken kann.

Bei Verwendung des Drehratensensors in einer elektromechanischen Sigma-Delta-Regelschleife dient das Rückkoppelsignal zum Rückstellen der Auslenkung der sekundären Masse und somit als direktes Maß für die auf die sekundäre Masse einwirkenden Kräfte. Ein Beispiel für eine solche Sigma-Delta-Regelschleife ist in der DE 10 2012 222 225 vorgeschlagen oder aus der US 6,253,612 B1 bekannt.

Die Vorteile bei Verwendung einer Sigma-Delta-Regelschleife sind hierbei das digital vorliegende Ausgangssignal, sowie verbesserte Eigenschaften des Gesamtsystems im Vergleich zu nicht rückgekoppelten Systemen.

Abhängig vom Aufbau des Drehratensensors stehen entweder Detektionselektroden sowie separate Rückkoppelelektroden zur Verfügung, oder die Detektion und Rückkopplung müssen mit denselben Elektroden bewerkstelligt werden. Im ersten Fall werden die Rückkoppelelektroden typischerweise zusätzlich zum Einstellen der Resonanzfrequenz des Detektionsschwingers sowie zur Kompensation von sogenannten Quadraturfehlern verwendet. Im zweiten Fall stehen üblicherweise zusätzliche Elektroden zur Einstellung der Resonanzfrequenz und zur Quadraturkompensation zur Verfügung, die auf Grund des Sensoraufbaus allerdings nicht zur Rückstellung des Coriolissignals verwendet werden können. Diese Methode, welche dieselben Elektroden für Detektion und Rückkopplung verwendet, bietet die Möglichkeit, die Sensorgröße zu reduzieren.

Stehen separate Elektroden für die Rückkopplung zur Verfügung, kann die Kompensation der Coriolis-Kraft durch das Anlegen einer Spannung an diese Elektroden kompensiert werden. Diese Art der Rückkopplung ist auch unter der Bezeichnung "non-collocated feedback" bekannt und ist in dem Artikel Northemann, T.; Maurer, M.; Buhmann, A.; He, L. & Manoli, Y. "Excess Loop Delay compensated Electro-Mechanical Bandpass Sigma-Delta Modulator for Gyroscopes", Eurosensors XXIII, Lausanne, Switzerland, 2009, 1183-1186, beschrieben.

Sofern nur ein Satz Elektroden für Detektion und Rückstellung zur Verfügung steht, wird üblicherweise ein Teil der zur Verfügung stehenden Zeit für die Detektion und ein Teil für die Rückstellung der Sensormasse verwendet ("time multiplexing"). Hierzu wird die verwendete Detektionsschaltung (üblicherweise ein sogenannter "Ladungsintegrator") während der für die Rückkopplung benötigten Zeit mittels Schaltern vom Sensor getrennt und die für die Rückkopplung benötigten Signale werden an den Sensor angelegt. Detektion und Rückkopplung werden also im Wechsel durchgeführt. Diese Art der Rückkopplung wird bevorzugt in Verbindung mit der Schalter-Kondensator-Technik angewandt.

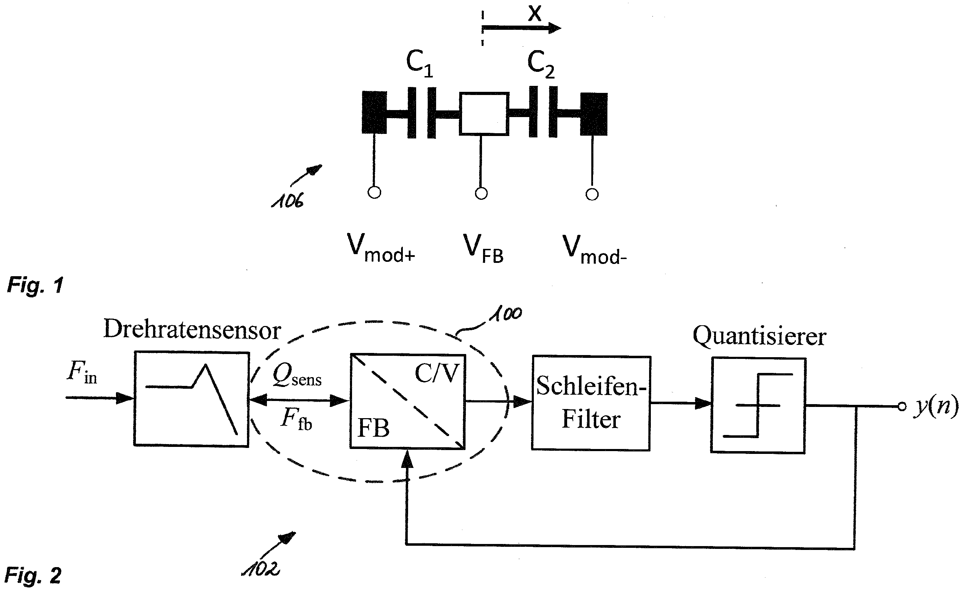

Figur 1 zeigt eine Prinzipskizze eines Beschleunigungssensors 106 mit beweglicher Mittenelektrode (an der sogenannten seismischen Masse, die auch als Schwingerelement bezeichnet werden kann) und feststehenden äußeren Elektroden.

Der Hersteller Analog Devices bietet beispielsweise mit dem Baustein ADXL50 [Analog Devices, ADXL50, Datasheet (http://www.analog.com/en/obsolete/adx150/products/product.html)] einen Beschleunigungssensor an, bei dem das Rückkoppelsignal (hochohmig) auf die bewegliche Mittenelektrode des Sensors (Bezugszeichen $V_{FB}$ in Fig. 1) gegeben wird. Zum Auslesen des Sensors wird ein hochfrequentes Trägersignal (1 MHz) auf die feststehenden Elektroden des Sensors gegeben (+$V_{mod}$/-$V_{mod}$), das Positionssignal wird als Spannungsänderung an der Mittenelektrode detektiert. Nach Demodulation mit der Trägerfrequenz sowie Filterung steht das Messsignal zur Verfügung. Dieses Verfahren kann man auch als Frequenz-Multiplexing bezeichnen.

Die EP 2 259 019 A1 bezieht auf ein mikroelektromechanisches Gyroskop, das eine Mikrostruktur mit einer feststehenden Struktur, einer Antriebsmasse, die in Bezug auf die feststehende Struktur mit einem ersten Freiheitsgrad gemäß einer Antriebsachse beweglich ist, und einer Erfassungsmasse, die mit der Antriebsmasse mechanisch gekoppelt ist, um gemäß der Antriebsachse in Bewegung gezogen zu werden, aufweist. Die Erfassungsmasse ist in Bezug auf die Antriebsmasse mit einem zweiten Freiheitsgrad gemäß einer Erfassungsachse beweglich, und zwar in Reaktion auf Rotationen der Mikrostruktur. Das Gyroskop weist weiterhin eine Antriebsvorrichtung auf, die eine mikroelektromechanischen Schleife mit der Mikrostruktur bildet, um die Antriebsmasse gemäß der Antriebsachse mit einer Ansteuerfrequenz in Schwingung zu halten. Die Antriebsvorrichtung weist eine zeitdiskrete Erfassungsschnittstelle, die mit der Mikrostruktur gekoppelt ist, um eine Position der Antriebsmasse in Bezug auf die Antriebsachse zu erfassen, sowie Steuereinrichtungen zum Steuern einer Schwingungsamplitude der mikroelektromechanischen Schleife auf der Basis der Position der von der Erfassungsschnittstelle erfassten Antriebsmasse auf.

Die US 2012/076339 A1 offenbart ein Bauelement mit einer mikromechanischen Mikrofonstruktur. Diese umfasst mindestens eine akustisch aktive Membran, die als auslenkbare Elektrode eines Mikrofonkondensators fungiert, ein feststehendes akustisch durchlässiges Gegenelement, das als Gegenelektrode des Mikrofonkondensators fungiert, und Mittel zum Erfassen und Auswerten der Kapazitätsänderungen des Mikrofonkondensators. Neben einer mikromechanischen Mikrofonstruktur mit einer akustisch aktiven Membran, die als auslenkbare Elektrode eines Mikrofonkondensators fungiert, und einem feststehenden akustisch durchlässigen Gegenelement, das als Gegenelektrode des Mikrofonkondensators fungiert, umfasst das bekannte Bauelement dazu Mittel zum Anlegen eines hochfrequenten Taktsignals an den Mikrofonkondensator und zum Anlegen des invertierten Taktsignals an einen einstellbaren aber akustisch nicht aktiven Kompensationskondensator, einen integrierenden Operationsverstärker, der die Summe des Stromflusses durch den Mikrofonkondensator; und des Stromflusses durch den Kompensationskondensator aufintegriert, einen mit dem Taktsignal synchronisierten Demodulator für das Ausgangssignal des integrierenden Operationsverstärkers und einen Tiefpassfilter, um aus dem Ausgangssignal des Demodulators ein den Kapazitätsänderungen des Mikrofonkondensators entsprechendes Mikrofonsignal zu gewinnen.

Bekannte Lösungen haben jedoch signifikante Nachteile.

Üblicherweise werden im Fall separater Rückkoppelelektroden hohe Spannungen (>10V) an den Rückkoppelelektroden benötigt, um die benötigten Kräfte einprägen zu können. Da für die typischen Anwendungsbereiche eine separate Hochvolt-Versorgungsspannung üblicherweise nicht zur Verfügung steht, beziehungsweise nicht erwünscht ist, wird in ASIC-Implementierungen üblicherweise eine Kombination aus Aufwärtswandlern ("Booststufen") und Hochvolt-Treibern implementiert.

Da die Rückkoppelelektroden wie oben beschrieben ebenfalls zur Einstellung der Resonanzfrequenz sowie zur Kompensation des Quadratureffekts dienen, ist, wie in der veröffentlichten deutschen Patentanmeldung DE 10 2011 005 745 A1 erläutert, eine genaue Berechnung und Einstellung der jeweils benötigten Spannungen nötig, um Wechselwirkungen zu vermeiden. Eine ausreichend genaue sowie leistungseffiziente Realisierung der benötigten Spannungen im Hochvoltbereich ist nur schwer möglich.

Bei der Verwendung von separaten Rückkoppelelektroden kann es außerdem zu Eigenfrequenzen der Elektroden kommen, welche die Stabilität des Systems gefährden können, wie dies in dem Artikel Seeger, J. I.; Jiang, X.; Kraft, M. & Boser, B. E. "Sense Finger Dynamics in a Sigma-Delta Force-Feedback Gyroscope", Proc. Tech. Dig. Solid-State Sensor and Actuator Workshop, 2000, 296-299, beschrieben ist.

Zur Realisierung des Time-Multiplexings sind üblicherweise Schalter im Signalpfad nötig, da eine Umschaltung zwischen Detektion und Rückkopplung realisiert werden muss.

Da nur ein Teil eines Taktzyklus zum Aufbringen der Rückkoppelkräfte verwendet werden kann, müssen dementsprechend höhere Kräfte aufgeprägt werden, um den gleichen Rückstelleffekt zu erzielen. Des Weiteren ist diese Art der Rückkopplung ("Return-to-Zero") im Vergleich zu durchgängig angelegten Rückkoppelsignalen ("Non-Return-to-Zero") anfälliger in Bezug auf Taktfrequenzschwankungen (Clock-Jitter), wie dies aus dem Artikel Cherry, J. A. & Snelgrove W.M.: Continuous-time Sigma-Delta modulators for high-speed A/D conversion, Kluwer Academic Publishers, 2000, hervorgeht.

Ebenso kann nur ein Teil des Taktzyklus zum Auslesen des Sensors verwendet werden. Somit steht die Information über die Position der Sensormasse nicht durchgehend zur Verfügung. Da die Positionsinformation beispielsweise bei Verwendung eines Ladungsintegrators durch Integration der durch die Sensorbewegung verursachten Ladungen erfolgt, führen die "Lücken" in den Bewegungsinformationen zur Reduktion der Signalamplitude wie auch zur Verfälschung der Positionsmessung.

Der Hauptnachteil des Frequenz-Multiplexings ist die Verwendung von hochfrequenten Trägersignalen. Bei dem oben erwähnten Baustein ADXL50 wird beispielsweise bei einer Bandbreite von 1 kHz ein Trägersignal mit einer Frequenz von 1 MHz verwendet.

Da bei Drehratensensoren die zu messenden Signale auf die Frequenz der Primärschwingung ($f_d \approx$ 10-25 kHz) moduliert sind, wären eine entsprechend höhere Bandbreite und somit entsprechend höhere Trägerfrequenzen erforderlich. Bei der Verwendung von Sigma-Delta-Regelschleifen müssen von der Detektionsschaltung Signale mit Frequenzen bis zu einem mehrfachen der Primärfrequenz (z. B. $8^*f_d$) möglichst störungsfrei erfasst werden. Dies könnte eine weitere Erhöhung der Trägerfrequenz erfordern.

Die Erzeugung dieser hochfrequenten Trägersignale erhöht den Energieverbrauch des Systems. Hochfrequente Signale müssen außerdem mit entsprechenden Maßnahmen abgeschirmt werden um keine Störsignale in der Gesamtschaltung zu verursachen.

Bei der Anwendung bei Drehratensensoren ist darüber hinaus die Position von zwei Schwingungen (Anregungsschwingung und Detektionsschwingung) auszulesen, wobei üblicherweise für beide schwingenden Massen nur eine gemeinsame Mittenelektrode zur Verfügung steht. Somit würde sich ein Rückkoppelsignal auf der Mittenelektrode auf beide Schwingungen auswirken (dies ist nicht erwünscht) und es müssten zur Detektion mehrere Trägersignale verwendet werden.

Aufgabe der Erfindung in der Anwendung ist es, die Schnittstelle zwischen kapazitivem Sensor und Elektronik bereit zu stellen. Hierbei soll die Schaltung sowohl beispielsweise als Ladungsintegrator die Position der Sensormasse als elektrisches Signal zur Verfügung stellen, als auch die von der Regelschleife vorgegebenen Rückstellkräfte in Form einer an die Sensorelektroden angelegten Spannung generieren. Diese beiden Funktionen sollen gleichzeitig und ohne die Verwendung von Trägersignalen durchgeführt werden.

Diese Aufgabe wird durch den Gegenstand der unabhängigen Ansprüche gelöst. Vorteilhafte Weiterbildungen des erfindungsgemäßen Gegenstandes sind in den Unteransprüchen angegeben.

Die Erfindung beruht auf der Idee, die für die Erzeugung der Rückkopplungskraft benötigte Spannung auf die Gleichtakt-Eingangsspannung ("Input Common Mode") der Ausleseschaltung zur Detektion der Positionsänderung zu modulieren. Durch die Änderung der Gleichtakt-Eingangsspannung wird die Spannung über der Detektionskapazität $C_{sense}$ eingestellt und somit eine Kraft auf die sekundäre Masse ausgeübt. Idealerweise ändert sich hierbei die Ausgangsspannung der Ausleseschaltung durch die Änderung der Gleichtakt-Eingangsspannung nicht. Die Ausleseschaltung detektiert nur das differentielle Eingangssignal, also die Positionsänderung.

Um die Rückkoppelspannung der Regelschleife auf die Gleichtakt-Eingangsspannung zu modulieren, wird die Rückkoppelspannung $V_{fb}$ am positiven Eingang eines zu einem Ladungsintegrator verschalteten Operationsverstärkers angelegt. Dieser erzeugt durch seine Rückkopplung ($R_{fb}$, $C_{fb}$) einen sogenannten virtuellen Kurzschluss zwischen dem positiven und dem negativen Eingang, das heißt, die Spannungen an den beiden Eingängen sind bis auf einen Regelfehler identisch. Dieser weitere Rückkopplungszweig sorgt also zum einen dafür, dass die Spannung am zweiten Eingang an den ersten Eingang übertragen wird, zum anderen dient er dazu, die Positionsänderungen des Sensors, die letztlich zu Kapazitätsänderungen führen, in eine Spannung zu übersetzen. Zusammen mit dem Operationsverstärker übernimmt dieser Rückkopplungszweig also die eigentliche Detektion. Vorzugsweise umfasst der Rückkopplungszweig eine Kapazität und ein Widerstandselement. Das Widerstandselement kann dabei durch einen oder mehrere Ohmsche Widerstände, einen oder mehrere Transistoren oder ein anderes entsprechendes Bauelement gebildet sein. Es kann aber auch nur eine Kapazität ohne separates Widerstandselement oder jede andere geeignete Form von Rückkopplungszweig vorgesehen sein.

Die aus dieser Verschiebung der Gleichtakteingangsspannung resultierende Änderung der Ausgangsspannung $V_{out}$ muss kompensiert werden, um eine Beeinflussung der Positionsdetektion zu verhindern. Dies kann durch eine Kompensationsschaltung am negativen Eingang des Operationsverstärkers erreicht werden.

Eine weitere vorteilhafte Ausgestaltung beinhaltet die Erweiterung des vorgestellten Konzeptes zu einem volldifferentiellen Ladungsintegrator mit integrierter Rückkopplung. Für diese Implementierung wird ein volldifferentieller "Differential Difference Amplifier" (DDA) verwendet. Des Weiteren liegen die Rückkoppelspannungen $V_{fb,p}$ und $V_{fb,n}$ volldifferentiell vor. Die Rückkoppelspannung $V_{fb,p}$ wird auf die Gleichtakt-Eingangsspannung des positiven und $V_{fb,n}$ auf die des negativen Signalpfads moduliert.

Verschiedene Konzepte für die benötigte Kompensation wurden entwickelt und werden im Folgenden dargestellt.

Zum besseren Verständnis der vorliegenden Erfindung wird diese anhand der in den nachfolgenden Figuren dargestellten Ausführungsbeispiele näher erläutert. Dabei können einige Merkmale oder Merkmalskombinationen aus den gezeigten und beschriebenen unterschiedlichen Ausführungsformen für sich genommen eigenständige, erfinderische oder erfindungsgemäße Lösungen darstellen.

Es zeigen:

**Fig. 1** eine Prinzipskizze eines Beschleunigungssensors mit beweglicher Mittenelektrode (an der seismischen Masse) und feststehenden äußeren Elektroden;

**Fig. 2** eine Übersichtsdarstellung des Gesamtsystems eines elektromechanischen Sigma-Delta-Modulators mit der vorgeschlagenen Schaltung für Detektion (C/V) und Rücckopplung (FB);

**Fig. 3** ein Schaltbild des vorgeschlagenen Konzeptes zur zeitkontinuierlichen Detektion und Rückkopplung;

**Fig. 4** eine Prinzipdarstellung der Erweiterung des Konzeptes zur zeitkontinuierlichen Detektion und Rückkopplung zu einem volldifferentiellen Ansatz;

**Fig. 5** ein Schaltbild der einfachsten resistiven und kapazitiven Kompensation;

**Fig. 6** die Erweiterung der Schaltung aus Fig. 5 zu einem volldifferentiellen Ladungsintegrator mit einfacher Kompensationsschaltung;

**Fig. 7** eine Darstellung des elektromechanischen Sigma-Delta-Modulators mit dem Konzept für automatische Kompensationseinstellung;

**Fig. 8** eine Erweiterung des Regelkonzeptes aus Fig. 7 für den volldifferentiellen Ladungsintegrator aus Fig. 6;

**Fig. 9** eine Darstellung des elektromechanischen Sigma-Delta-Modulators mit dem Konzept, bei dem die kapazitive Kompensation mit der auf $C_{comp}$ gespeicherten Ladung durchgeführt wird;

**Fig. 10** einen Schaltplan des volldifferentiellen Ladungsintegrators, bei dem die kapazitive Kompensation mit der auf $C_{comp}$ gespeicherten Ladung durchgeführt wird;

**Fig. 11** einen Schaltplan, bei dem der Ladungsintegrator periodisch mit dem Steuersignal $\Phi$ kurzzeitig vom Ladungsintegrator abgetrennt wird;

**Fig. 12** ein Schaltbild der volldifferentiellen Ausführung des in Fig. 11 dargestellten Konzepts zur Reduzierung des Einflusses von parasitären Kapazitäten auf die Kompensation

**Fig. 13** einen elektromechanischen Sigma-Delta-Modulator mit kapazitiver schaltbarer Übersprechkorrektur,

**Fig. 14** Messergebnisse (a) ohne (b) mit der kapazitiven schaltbaren Übersprechkorrektur.

Nachfolgend wird die vorliegende Erfindung mit Bezug auf die Figuren im Detail erläutert. Fig. 2 zeigt dabei die erfindungsgemäße Schaltung in ihrer Anwendungsumgebung. Dabei ist die vorgeschlagene Schaltung 100 für die Detektion (C/V) und Rückkopplung (FB) in dem Gesamtsystem eines elektromechanischen Sigma-Delta-Modulators 102 gestrichelt eingekreist. Grundsätzlich sind die Prinzipien der vorliegenden Erfindung aber auch auf andere Arten von geschlossenen Regelschleifen zum Auslesen und Betreiben kapazitiver Sensoren anwendbar.

Erfindungsgemäß wird die für die Erzeugung der Rückkopplungskraft benötigte Spannung auf die Gleichtakt-Eingangsspannung ("Input Common Mode") der Ausleseschaltung zur Detektion der Positionsänderung moduliert. Durch die Änderung der Gleichtakt-Eingangsspannung wird die Spannung über der Detektionskapazität $C_{sense}$ eingestellt und somit eine Kraft auf die sekundäre Masse ausgeübt. Idealerweise ändert sich hierbei die Ausgangsspannung der Ausleseschaltung durch die Änderung der Gleichtakt-Eingangsspannung nicht. Die Ausleseschaltung detektiert nur das differentielle Eingangssignal und damit die Positionsänderung.

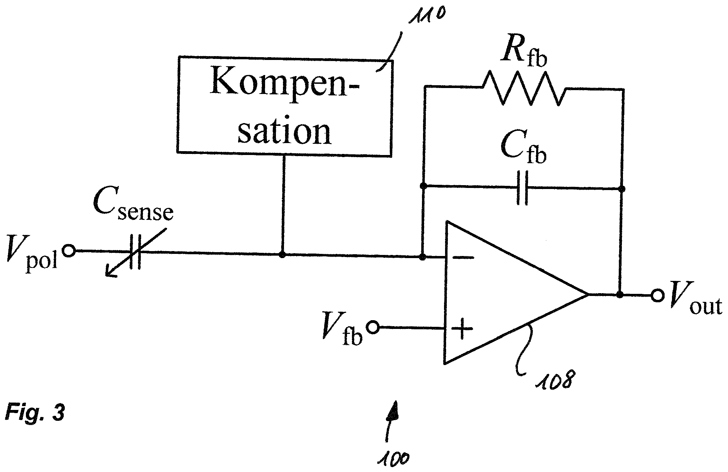

Fig. 3 zeigt schematisch das vorgeschlagene Konzept zur zeitkontinuierlichen Detektion und Rückkopplung.

Um die Rückkoppelspannung der Regelschleife auf die Gleichtakt-Eingangsspannung zu modulieren, wird die Rückkoppelspannung $V_{fb}$ am positiven Eingang eines zu einem Ladungsintegrator verschalteten Operationsverstärkers 108 angelegt. Dieser erzeugt durch seine Rückkopplung ($R_{fb}$, $C_{fb}$) einen sogenannten virtuellen Kurzschluss zwischen dem positiven und dem negativen Eingang, das heißt die Spannungen an den beiden Eingängen sind bis auf einen Regelfehler identisch. Die aus dieser Verschiebung der Gleichtakteingangsspannung resultierende Änderung der Ausgangsspannung $V_{out}$ muss kompensiert werden, um eine Beeinflussung der Positionsdetektion zu verhindern. Dies kann durch eine Kompensationsschaltung 110 am negativen Eingang des Operationsverstärkers 108 erreicht werden.

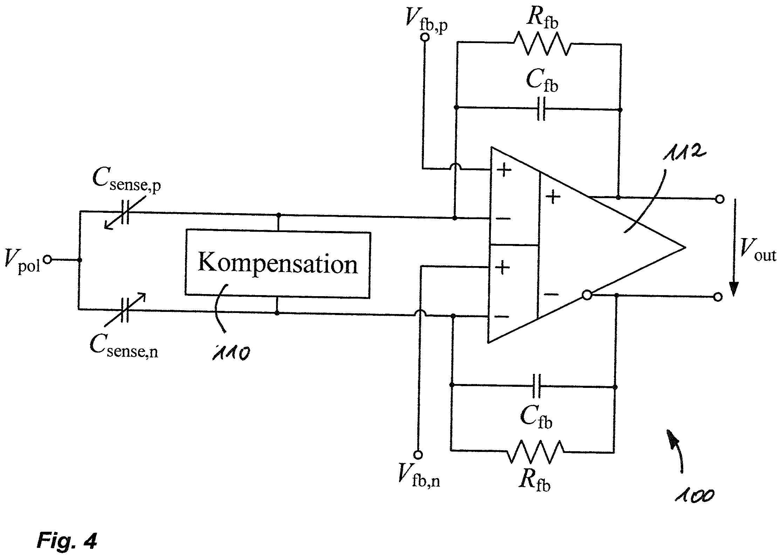

Fig. 4 zeigt die Erweiterung des vorgestellten Konzeptes zu einem volldifferentiellen Ladungsintegrator mit integrierter Rückkopplung. Für diese Implementierung wird ein volldifferentieller "Differential Difference Amplifier" (DDA) 112 verwendet. Des Weiteren liegen die Rückkoppelspannungen $V_{fb,p}$ und $V_{fb,n}$ volldifferentiell vor. Die Rückkoppelspannung $V_{fb,p}$ wird auf die Gleichtakt-Eingangsspannung des positiven und $V_{fb,n}$ auf die des negativen Signalpfads moduliert.

Für die erforderliche Kompensation können verschiedene Konzepte verwendet werden.

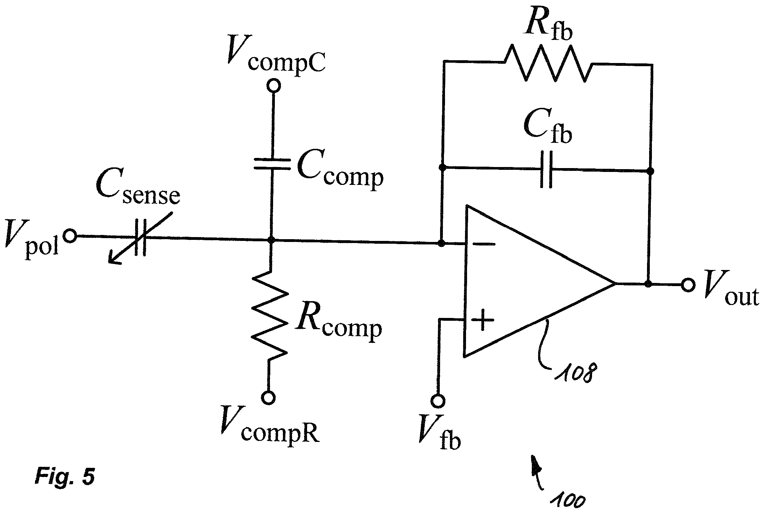

In der einfachsten Ausführung besteht das Kompensationsnetzwerk 110 aus einem Widerstand $R_{comp}$ und einer Kapazität $C_{comp}$. An diesen wird eine Kompensationsspannung $V_{compR}$, bzw. $V_{compC}$ angelegt, so dass bei der Änderung der Gleichtakt-Eingangsspannung eine Änderung der Ausgangsspannung des Ladungsintegrators 108 unterdrückt wird. Fig. 5 zeigt ein Schaltbild der einfachsten resistiven und kapazitiven Kompensation.

Die resistive Kompensation ($R_{comp}$ und $V_{compR}$) muss den Stromfluss aufgrund der Änderung der Gleichtakt-Eingangsspannung durch den Rückkoppelwiderstand $R_{fb}$ des Ladungsintegrators 108 kompensieren. Die Höhe des Kompensationsstroms wird über die Amplitude der resistiven Kompensationsspannung $\Delta V_{compR}$ und über den Kompensationswiderstand $R_{comp}$ festgelegt.

Die kapazitive Kompensation muss die benötigte Ladung zur Verfügung stellen, um die kapazitive Last am negativen Eingang des Ladungsintegrators auf die neue Gleichtakt-Eingangsspannung zu laden. Diese Ladung kann über die Größe der Kompensationskapazität $C_{comp}$ und durch die Amplitude der Kompensationsspannung $\Delta V_{compC}$ eingestellt werden.

Die Bedingungen, die für eine abgeglichene resistive sowie kapazitive Kompensation erfüllt sein müssen, sind nachfolgend zusammengefasst (Gl. 2 und Gl. 3).

Für eine abgeglichene resistive Kompensation muss folgendes Verhältnis von Amplitude der Rückkoppelspannung $\Delta V_{fb}$ zu $\Delta V_{compR}$ eingehalten werden:

$$\Delta V_{fb}/\Delta V_{compR} = R_{fb}/(R_{fb}+R_{comp}). \qquad\qquad \text{Gl. 2}$$

Für eine abgeglichene kapazitive Kompensation muss die folgende Gleichung erfüllt sein

$$C_{comp}\, \Delta V_{compC} = (C_{comp} + C_{sense} + C_{fb} + C_{para})\, \Delta V_{fb}. \qquad\qquad \text{Gl. 3}$$

Hierbei fasst $C_{para}$ alle parasitären Kapazitäten am negativen Eingang des Ladungsintegrators zusammen.

Für den Fall eines Sigma-Delta Modulators als Regelschleife kann für $V_{compR}$ und $V_{compC}$ ein Rechtecksignal in Phase mit dem Rückkoppelsignal $V_{fb}$ verwendet werden.

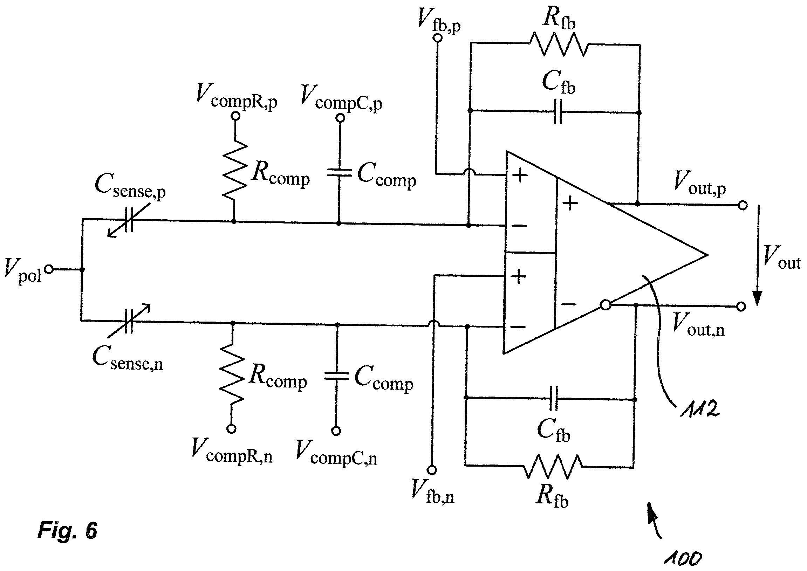

In Fig. 6 ist die volldifferentielle Erweiterung des Kompensationsnetzwerkes 110 aus Fig. 5 dargestellt. Die Kompensationsspannungen ($V_{CompR,p}$, $V_{compR,n}$ und $V_{compC,p}$, $V_{compC,n}$) liegen volldifferentiell vor.

Gemäß einer vorteilhaften Ausführungsform der vorliegenden Erfindung wird im Falle der Verwendung eines Sigma-Delta-Modulators eine automatische Kompensationseinstellung vorgenommen. Dies wird nachfolgend im Detail erläutert.

Aufgrund von unbekannten parasitären Kapazitäten am negativen Eingangsknoten des Ladungsintegrators ist eine automatische kapazitive Kompensationseinstellung vorteilhaft. Hierfür wird der Einfluss eines kapazitiven Fehlabgleichs am Ausgang des Ladungsintegrators detektiert.

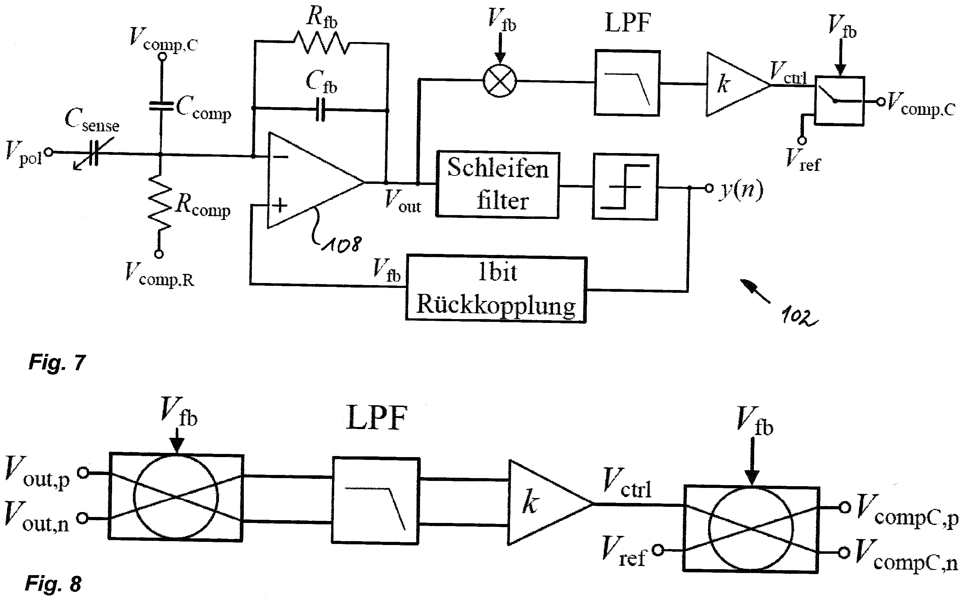

Ein kapazitiver Fehlabgleich verursacht ein Störsignal am Ausgang des Ladungsintegrators 108, welches mit dem Rückkoppelsignal des Sigma-Delta-Modulators 102 korreliert ist. Nach dem Mischen der Ausgangsspannung $V_{out}$ des Ladungsintegrators 108 mit dem Ausgangssignal $y(n)$ des Sigma-Delta-Modulators und anschließender Tiefpassfilterung (LPF) wird eine Spannung generiert, welche ein Maß für den kapazitiven Fehlabgleich darstellt (Fig. 7). Dieses Konzept der Trennung von dem Störsignal vom eigentlichen Ausgangssignal entstammt einer früheren Veröffentlichung der Fritz-Hüttinger-Professur für Mikroelektronik, nämlich dem Artikel Northemann, T; Maurer, M.; Manoli, Y. "Compensation Technique for Capacitive Crosstalk in Continuous-Time Electro-Mechanical Sigma-Delta Modulators", Proceedings of the Eurosensors Conference, 2011: 1281-1284.

Ein Regler korrigiert die Amplitude der Rückkoppelspannung so, dass der Fehlabgleich minimiert wird. Hierbei wird das Rechtecksignal durch Umschalten zwischen der Ausgangsspannung des Reglers $V_{ctrl}$ und einem festen Referenzpotential $V_{ref}$ generiert. Fig. 7 zeigt eine erste Ausführungsform des elektromechanischen Sigma-Delta-Modulators mit dem Konzept für automatische Kompensationseinstellung.

Die Erweiterung der Regelung für den in Fig. 6 dargestellten volldifferentiellen Ladungsintegrator ist in Fig. 8 gezeigt. Durch diese Regelung werden die volldifferentiellen kapazitive Kompensationsspannungen $V_{compC,p}$ und $V_{compC,n}$ generiert.

Für die resistive Kompensation ist eine Regelung nicht erforderlich. Da der negative Eingangsknoten des Ladungsintegrators hochohmig ist, muss nur der bekannte Strom durch den Rückkoppelwiderstand $R_{fb}$ des Ladungsintegrators kompensiert werden.

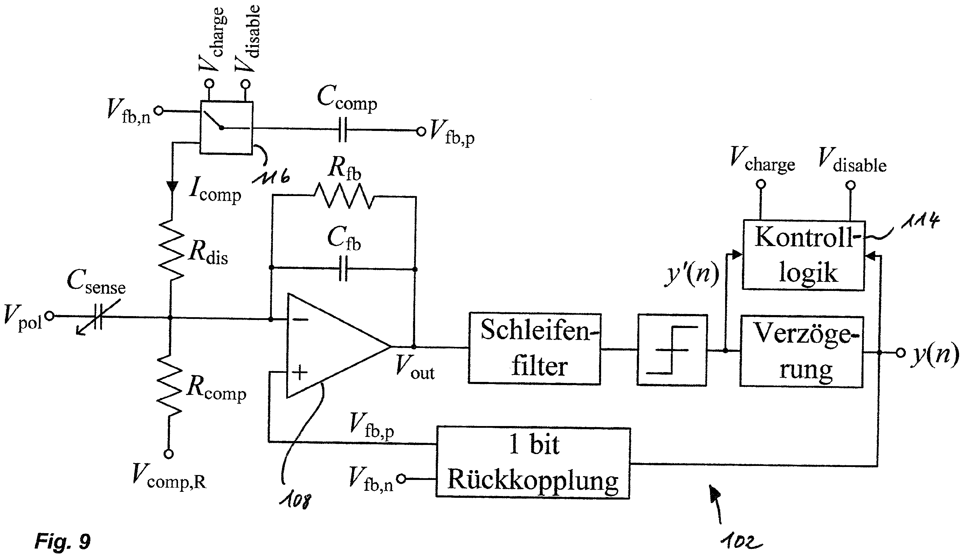

Eine weitere vorteilhafte Ausführungsform verwendet eine geschaltete kapazitive Kompensation. Bei dieser Kompensationsmethode entfällt die Erzeugung einer zusätzlichen kapazitiven Kompensationsspannung. Durch die Verwendung von bereits vorhandenen Spannungen kann der Energieverbrauch gesenkt werden. Figur 9 zeigt eine Darstellung des elektromechanischen Sigma-Delta-Modulators mit dem Konzept, bei dem die kapazitive Kompensation mit der auf $C_{comp}$ gespeicherten Ladung durchgeführt wird.

Die Ladung, die für die kapazitive Kompensation benötigt wird, wird durch Vorladen eines Kondensators zur Verfügung gestellt. Dieser Kondensator $C_{comp}$ wird mit der bereits vorhandenen volldifferentiellen Rückkoppelspannung $V_{fb,p}$ und $V_{fb,n}$ geladen (Fig. 9). Wenn sich der Ausgang des Sigma-Delta-Modulators $y(n)$ und sich damit die Rückkoppelspannungen $V_{fb,n}$ und $V_{fb,p}$ ändern, muss eine Kompensation durchgeführt werden. Hierfür wird der Kondensator $C_{comp}$ mit dem negativen Eingang des Ladungsintegrators 108 verbunden. Die im Kondensator gespeicherte Kompensationsladung wird hierbei auf den negativen Eingangsknoten übertragen.

Die Schaltvorgänge erfolgen mittels einer Schalteinheit 116 und werden von einer einfachen digitalen Kontrolllogik 114 gesteuert. Diese detektiert die Änderung des Ausgangssignals des Sigma-Delta-Modulators $y(n)$ und setzt die Steuersignale $V_{charge}$ und $V_{disabie}$ entsprechend.

Für die resistive Kompensation wird weiterhin eine Generierung einer Kompensationsspannung $V_{compR}$ benötigt.

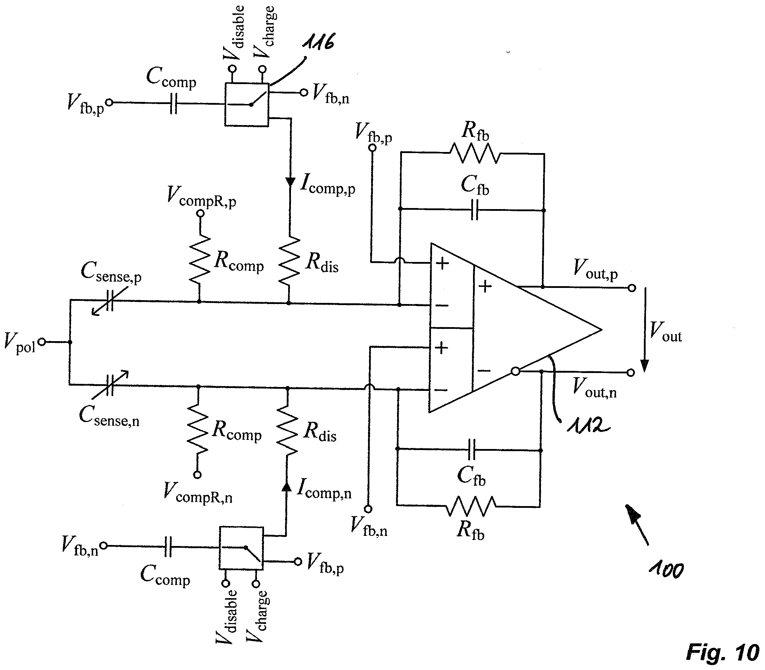

Die Erweiterung dieses Konzeptes auf einen volldifferentiellen Ladungsintegrator 112 mit geschalteter kapazitiver Kompensation ist in Fig. 10 dargestellt, die einen Schaltplan des volldifferentiellen Ladungsintegrators zeigt, bei dem die kapazitive Kompensation mit der auf $C_{comp}$ gespeicherten Ladung durchgeführt wird.

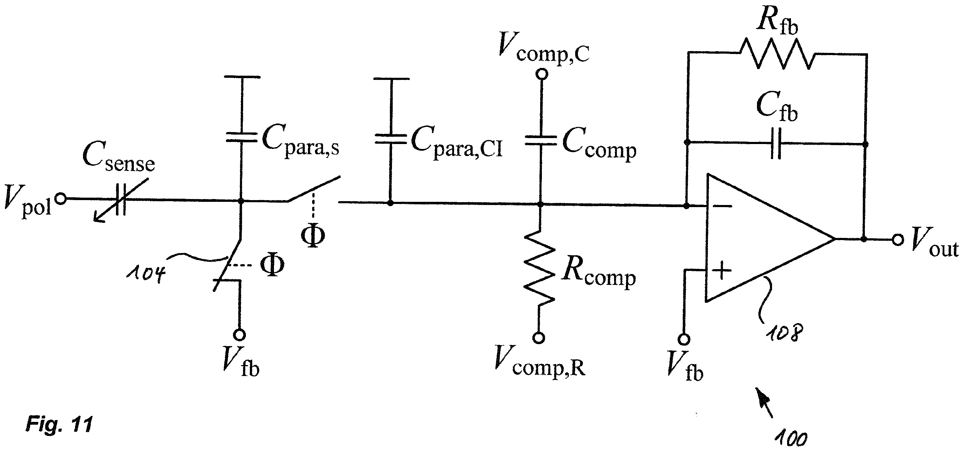

Eine weitere vorteilhafte Ausführungsform der vorliegenden Erfindung betrifft das Vorladen der Sensorkondensatoren. Mit Bezug auf die Figuren 11 bis 14 wird eine Methode beschrieben, durch die es ermöglicht wird, die Sensorkapazität $C_{sense}$ sowie die unbekannten parasitären Kapazitäten des Drehratensensors $C_{para,s}$ für die Kompensation auszublenden. Dieses Verfahren kann für die oben beschriebenen Konzepte verwendet werden und beruht auf einer Technik, die verwendet wird, um den Ladungsintegrator vor kapazitivem Übersprechen zu schützen.

Bei dieser Technik wird mindestens ein Schalter 104 zwischen den Sensor 106 und den Ladungsintegrator 108 eingebaut. Bei jedem möglichen Wechsel der Rückkoppelspannung $V_{fb}$ wird der Sensor kurz vom Ladungsintegrator getrennt und mit der Rückkoppelspannung verbunden. Im Gegensatz zum Time-Multiplexing-Verfahren findet hierbei die Rückkopplung während der gesamten Zeit statt und der Ladungsintegrator wird nur so lange vom Sensor getrennt, wie dies zum Umladen der Kondensatoren notwendig ist (üblicherweise einige Prozent des Taktzyklus). Dieses Umschalten wird mit dem Steuersignal $\Phi$ durchgeführt. Während der Sensor vom Ladungsintegrator getrennt ist, werden die Sensorkapazität $C_{sense}$ und die große parasitäre Kapazität $C_{para,s}$ auf die neue Rückkoppelspannung geladen (Fig. 11). Die benötigte Ladung wird hierbei nicht von der kapazitiven Kompensation geliefert. Deshalb müssen diese Kapazitäten für die kapazitive Kompensation nicht berücksichtigt werden. Die parasitären Kapazitäten am Eingangsknoten des Ladungsintegrators $C_{para,Cl}$ werden dadurch im Vergleich zu den vorgestellten Konzepte ohne Abtrennen des Ladungsintegrators stark verringert.

Die resultierende Abgleichbedingung für die kapazitive Kompensation ist Gl. 4 aufgeführt:

$$C_{comp}\, \Delta V_{compC} = (C_{comp} + C_{fb} + C_{para,Cl})\, \Delta V_{fb}. \qquad \text{Gl. 4}$$

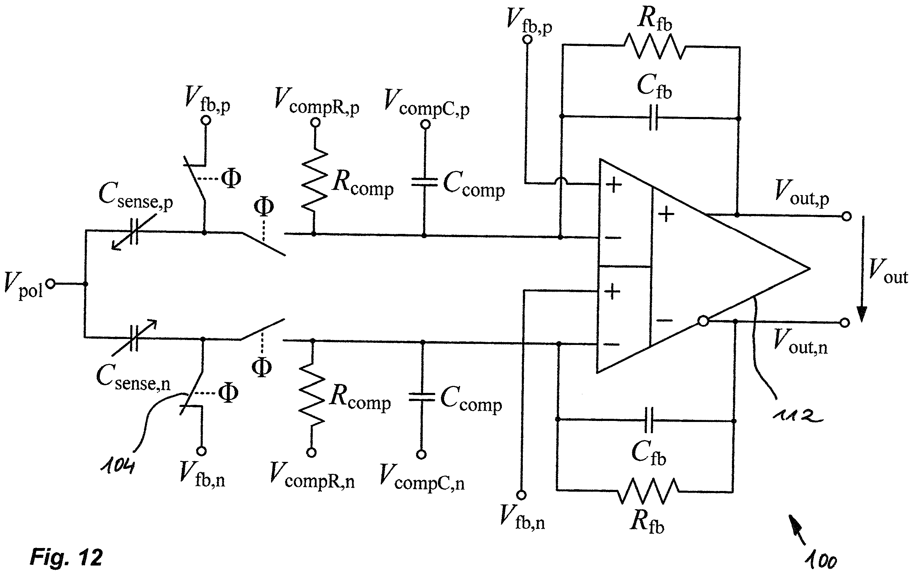

In Fig. 12 ist die Ausführung für den volldifferentiellen Ladungsintegrator 112 dargestellt. Hierbei werden die Sensorkapazitäten vom positiven ($C_{sense,p}$) und vom negativen ($C_{sense,n}$) Signalpfad mit der entsprechenden Rückkoppelspannung ($V_{fb,p}$, bzw. $V_{fb,n}$) vorgeladen und anschließend mit dem Ladungsintegrator 112 verbunden. Die parasitären Kapazitäten von dem Sensor und am Eingang des Ladungsintegrators sind zur Vereinfachung der Darstellung nicht dargestellt. Wie in Fig. 11 gezeigt, wird der Ladungsintegrator periodisch mit dem Steuersignal $\Phi$ kurzzeitig vom Sensor abgetrennt. Die parasitären Kapazitäten, die für die Kompensation berücksichtigt werden müssen, werden verringert. Fig. 12 zeigt das entsprechende Schaltbild der volldifferentiellen Ausführung des in Fig. 11 dargestellten Konzepts zur Reduzierung des Einflusses von parasitären Kapazitäten auf die Kompensation.

Im Folgenden soll beispielhaft der Einfluss einer Fehlkompensation auf das Rauschen im Signalband (IBN, "In Band Noise") für einen Bandpass-Sigma-Delta-Modulator sechster Ordnung gezeigt werden. Dazu werden ideale Kompensationsspannungen $V_{compR}$ und $V_{compC}$ angenommen. Der Fehlabgleich wird auf den Kompensationswiderstand $R_{comp}$, bzw. auf die Kompensationskapazität $C_{comp}$ umgerechnet.

Für die Berechnung des resistiven Fehlabgleichs wird die Abweichung des Kompensationswiderstandes auf den Rückkoppelwiderstand normiert. Dies wird durch $k_R$ beschrieben:

$$k_R = (R_{comp} - R_{fb})/R_{fb}. \qquad \text{Gl. 5}$$

Ein resistiver Fehlabgleich von $k_R < 0{,}1$ kann Schaltungstechnisch gut erreicht werden. In diesem Bereich verschlechtert sich das Rauschen im Signalband kaum (Tabelle 1). Das erreichte IBN liegt unterhalb des limitierenden elektrischen Rauschens der Schaltung, welches bei ungefähr -90 dbFS liegt.

**Tabelle 1:** Einfluss eines resistiven Fehlabgleichs auf das Rauschen im Signalband

| $k_R$ | -0,2 | -0,1 | -0,05 | -0,01 | 0 | 0,01 | 0,05 | 0,1 | 0,2 |
|---|---|---|---|---|---|---|---|---|---|
| IBN/dBFS | -117 | -116 | -118,4 | -117 | -118,5 | -117,5 | -117,7 | -117,3 | -112,3 |

Für den kapazitiven Fehlabgleich wird die Abweichung der Kompensationskapazität $C_{comp}$ von der idealen Kompensation bestimmt und auf die Rückkoppelkapazität $C_{fb}$ normiert. Unter der Annahme, dass die Amplitude der kapazitiven Kompensationsspannung $\Delta V_{compC}$ doppelt so groß ist wie die Amplitude der Rückkoppelspannung $\Delta V_{fb}$, beschreibt $k_C$ den Fehlabgleich:

$$k_C = (C_{comp} - C_{fb} - C_{sense} - C_{para})/C_{fb}. \hspace{3cm} \text{Gl. 6}$$

In Tabelle 2 ist das Rauschen im Signalband in Abhängigkeit von $k_C$ aufgelistet. Auch hier ist das Gesamtsystem robust gegenüber einem Fehlabgleich. Werte von $|k_C| < 0,1$ sind durch Kontrollieren der Amplitude der Kompensations-spannung $\Delta V_{compC}$ oder durch digital konfigurierbare Kompensationskapazitäten $C_{comp}$ erreichbar.

**Tabelle 2:** Einfluss eines kapazitiven Fehlabgleichs, dargestellt durch $k_C$, auf das Rauschen im Signalband

| $k_C$ | -0,2 | -0,1 | -0,05 | -0,01 | 0 | 0,01 | 0,05 | 0,1 | 0,2 |
|---|---|---|---|---|---|---|---|---|---|
| IBN/dBFS | -120 | -122,6 | -121,3 | -116,7 | -118,5 | -117,5 | -115,7 | -112.7 | -108,6 |

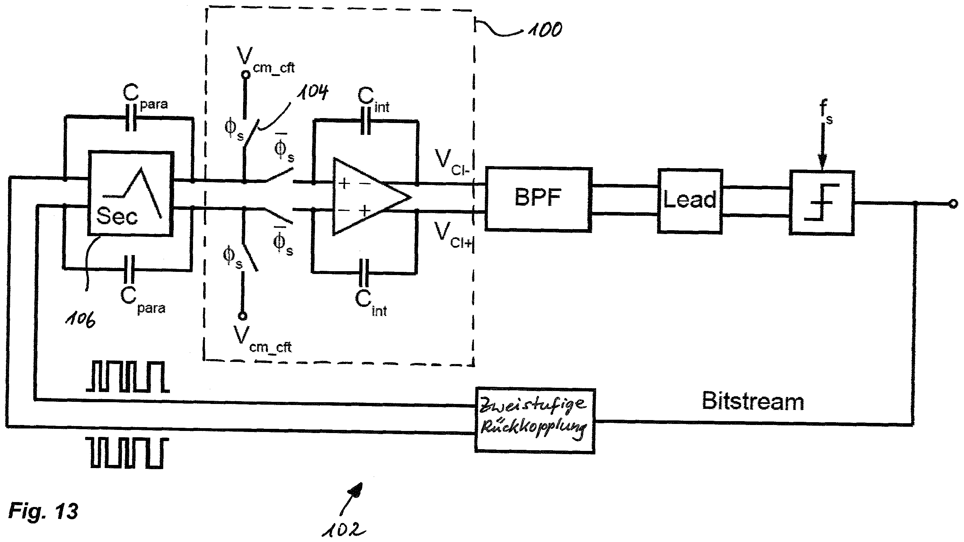

Figur 13 zeigt eine weitere Ausführungsform eines Sigma-Delta-Modulators 102 mit einer volldifferenziellen Detektionsschaltung 100 und einer geschalteten Kompensation der parasitären Kapazitäten des Drehratensensors. Wie in Figur 13 gezeigt, werden, um den Einfluss der parasitären Kapazitäten zu kompensieren, vier Schalter 104 eingefügt. Die Schalter 104 trennen den Eingang der Detektionsschaltung 100 von dem Sensor 106 jedes Mal, wenn der Komparatorausgang des Sigma-Delta-Modulators sich ändert. Gleichzeitig wird der Ausgang des Sensors 106 mit dem Knoten $V_{cm\_Cft}$ verbunden, der auf einem Potential mit der halben Versorgungsspannung liegt. Während dieser Abtrennung, die in etwa während einem Prozent der Abtastperiode $T_S$ ($T_S=1/f_S$) erfolgt, werden alle parasitären Ladungen auf diesem Referenzknoten kurz geschlossen anstatt auf den Eingangsknoten des Ladungsintegrators zu fließen. Nach dieser kurzen Auftrennung wird der Eingang der Detektionsschaltung 100 wieder mit dem Sensor verbunden um das Sensorsignal zu erfassen.

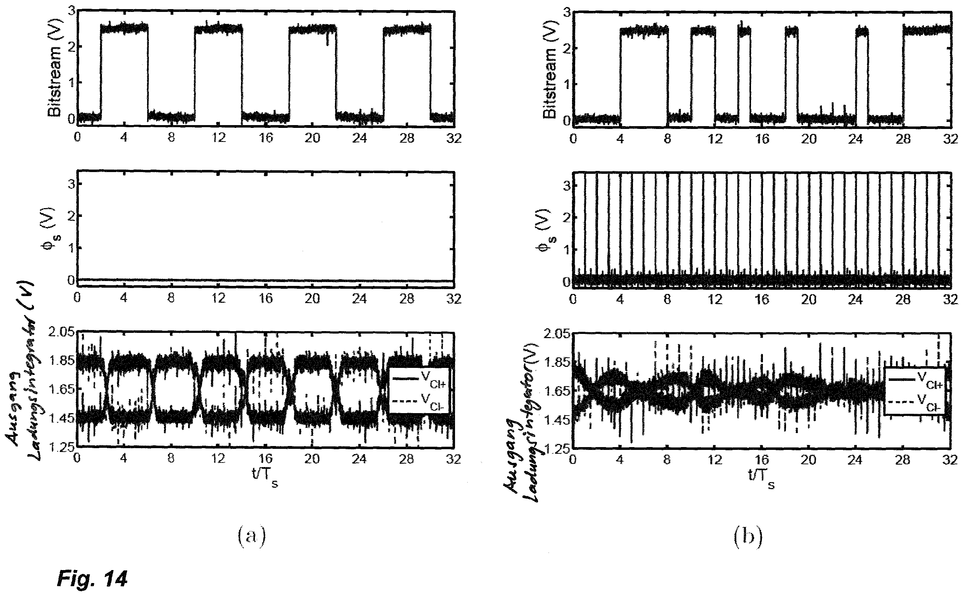

Figur 14 zeigt beispielhafte Messergebnisse, die mit dem Sigma-Delta-Modulator erzielt werden. Dabei zeigt Figur 14(a) den Fall, in dem die Auftrenntechnik gemäß Figur 13 nicht angewendet wird, und Figur 14(b) zeigt den Fall eines stabilen Modulatorverhaltens infolge der Auftrenntechnik aus Figur 13.

Wie in Figur 14(a) gezeigt, sind in der untersten Grafik, die den Ladungsintegratorausgang zeigen, Übersprecheffekte infolge des Bitstreams und der parasitären Kapazitäten sichtbar. Im Gegensatz dazu wird gemäß Figur 14(b) jedes Mal wenn der Komparator des Sigma-Delta-Modulators abgetastet wird, ein positives Auftrennsignal $f_S$ erzeugt, das an die Schalter angelegt wird, auch wenn keine Änderung an dem mit Bitstream bezeichneten Komparatorausgang auftritt. Auf diese Weise kann das Auftrennsignal $\Phi_S$ aus der Abtastfrequenz $f_S$ des Komparators abgeleitet werden und es ist nicht notwendig eine zusätzliche Detektionsschaltung vorzusehen, die den tatsächlichen Wechsel des Komparatorausgangs erfasst. Die Ladungsintegratorausgangssignale liegen in Figur 14(b) im Bereich der Gleichtaktspannung ohne Signalabfälle. Dies zeigt einen stabilen Sigma-Delta-Betrieb. Da die Kraftrückkopplungssignale ebenfalls Ladungsübersprechen auf die primären Detektionsknoten verursachen können, sollte die Antriebsregelschleife diese Technik ebenfalls beinhalten.

Die Vorgehensweise, durch gesteuerte Schalter den Sensor von der Detektionsschaltung abzutrennen und mit der Common-Mode-Spannung zu verbinden, kann zum einen, wie in Fig. 13 gezeigt, mit der non-collocated Feedback-Technik, zum anderen aber auch mit der collocated Feedback-Technik genutzt werden.

Zusammenfassend bietet die vorliegende Erfindung den Vorteil, dass die Möglichkeit geschaffen wird, gleichzeitig den Sensor auszulesen und Rückstellkräfte auf dieselben Elektroden aufprägen, ohne dass hierzu Zeitmultiplexing oder hochfrequente Trägersignale verwendet werden müssen. Die daraus resultierenden geringeren Anforderungen an den Ladungsintegrator im vorgestellten Konzept gegenüber der Implementierung in Schalter-Kondensator-Technik bietet die Möglichkeit den Energieverbrauch der Ausleseschaltung zu verringern. Im Vergleich zu Sensoren mit separaten Elektroden für Detektion und Rückkopplung besteht die Möglichkeit, die Sensorfläche zu reduzieren.

Für die Einstellung der benötigten Kompensationsspannungen ist ein automatischer Abgleich möglich. Durch die Ausführung des Systems als elektromechanischer Bandpass-Sigma-Delta-Modulator ist das System auch ausreichend robust in Bezug auf Fehleinstellungen.

**Patentansprüche**

1. System zum Auslesen mindestens eines Positionssignals eines mikromechanischen kapazitiven Sensors mit mindestens einem zu einer Schwingbewegung anregbaren Schwingerelement, umfassend eine Detektionsschaltung (100), den kapazitiven Sensor (106) und eine Regelschleife (102) wobei ein erster Eingangsanschluss der Detektionsschaltung (100) mit mindestens einem Ausgangsanschluss des kapazitiven Sensors (106) verbunden ist und ein Ausgangsanschluss der Detektionsschaltung (100) mit einem Schleifenfilter der Regelschleife (102) verbunden ist,

wobei die Regelschleife dazu ausgebildet ist, eine Rückkoppelspannung in Abhängigkeit von einer Ausgangsspannung der Regelschleife (102) an einen zweiten Eingangsanschluss der Detektionsschaltung (100) zurückzukoppeln, so dass eine Rückstellkraft auf den kapazitiven Sensor (106) ausgeübt wird,

wobei die Detektionsschaltung (100) mindestens einen weiteren Rückkopplungszweig ($R_{fb}$, $C_{fb}$) umfasst und dazu ausgebildet ist, die Ausgangsspannung der Regelschleife (102) auf eine Gleichtakteingangsspannung der Detektionsschaltung aufzumodulieren.

2. System nach Anspruch 1, wobei die Rückkoppelspannung an den positiven Eingang eines zu einem Ladungsintegrator verschalteten Operationsverstärkers (108) angelegt wird.

3. System nach Anspruch 2, wobei der weitere Rückkopplungszweig eine Parallelschaltung aus einem Rückkopplungswiderstandselement ($R_{fb}$) und einem Rückkopplungskondensator ($C_{fb}$) aufweist und/oder wobei die Detektionsschaltung (100) weiterhin eine Kompensationsschaltung (110) zum Kompensieren einer Änderung der Ausgangsspannung des Operationsverstärkers infolge der Verschiebung der Gleichtakteingangsspannung aufweist.

4. System nach Anspruch 3, wobei die Kompensationsschaltung (110) eine Kompensationskapazität aufweist, die an einem ersten Anschluss mit dem ersten Eingangsanschluss der Detektionsschaltung und mit ihrem anderen Anschluss mit einer kapazitiven Kompensationsspannung verbunden ist.

5. System nach einem der vorhergehenden Ansprüche, wobei die Detektionsschaltung einen volldifferentiellen Ladungsintegrator (112) mit zwei negativen Eingängen zum Erfassen der Kapazitätsänderung zweier gekoppelter differentieller Kapazitäten des kapazitiven Sensors aufweist, und wobei zwei weitere Rückkopplungszweige vorgesehen sind.

6. System nach Anspruch 5, wobei jeder der Rückkopplungszweige ($R_{fb}$, $C_{fb}$) eine Parallelschaltung aus einem Rückkopplungswiderstand und einem Rückkopplungskondensator aufweist.

7. System nach Anspruch 5 oder 6, wobei mit jedem der beiden negativen Eingänge eine Kompensationsschaltung (110) zum Kompensieren einer Änderung der Ausgangsspannung des Operationsverstärkers (112) infolge der Verschiebung der Gleichtakteingangsspannung verbunden ist.

8. System nach Anspruch 3 oder 4 oder 7, wobei zum automatischen Erzeugen einer kapazitiven Kompensationsspannung eine Kompensationseinstellungsschaltung vorgesehen ist, die den Einfluss eines kapazitiven Fehlabgleichs auf die Ausgangsspannung der Detektionsschaltung detektiert.

9. System nach Anspruch 8, wobei die Regelschleife ein Sigma-Delta Modulator ist und die Kompensationseinstellungsschaltung weiterhin umfasst:

einen Mischer zum Multiplizieren der Ausgangsspannung der Detektionsschaltung mit dem Ausgangssignal der Sigma-Delta-Regelschleife und
ein Tiefpassfilter (LPF), das mit einem Ausgangsanschluss des Mischers verbunden ist.

10. System nach Anspruch 9, wobei die Kompensationseinstellungsschaltung weiterhin einen Regler umfasst, der die Amplitude der Rückkoppelspannung so korrigiert, dass ein Fehlabgleich $k_C$ minimiert wird.

11. System nach einem der Ansprüche 3 oder 7, wobei zum Bereitstellen einer kapazitiven Kompensation mindestens ein Kompensationskondensator mit der Rückkoppelspannung geladen wird und über einen Entladewiderstand mit dem ersten Eingangsanschluss der Detektionsschaltung verbunden ist.

12. System nach Anspruch 11, weiterhin umfassend eine Schalteinheit (116) zum gesteuerten Entladen des Kompensationskondensators in Abhängigkeit von einer Änderung der Regelschleife.

**13.** System nach einem der vorangehenden Ansprüche, wobei die Detektionsschaltung einen Kompensationswiderstand umfasst, der an einem ersten Anschluss mit dem ersten Eingangsanschluss der Detektionsschaltung und mit seinem anderen Anschluss mit einer resistiven Kompensationsspannung verbunden ist und/oder wobei weiterhin mindestens ein erster und ein zweiter gesteuerter Schalter (104) vorgesehen sind, die den Ausgangsanschluss des Sensors (106) von dem Eingang der Detektionsschaltung (100) trennen und mit der Rückkoppelspannung verbinden.

**14.** Verfahren zum Ansteuern und zeitkontinuierlichen Auswerten eines mikromechanischen kapazitiven Sensors mit mindestens einem zu einer Schwingbewegung anregbaren Schwingerelement und einer elektrostatischen Anregungseinheit, die mindestens eine Kapazität umfasst, wobei das Verfahren die folgenden Schritte aufweist:

Betreiben des kapazitiven Sensors in einer Regelschleife, wobei die Regelschleife eine Rückkoppelspannung zum Bereitstellen einer Rückstellkraft in Abhängigkeit von einer Ausgangsspannung der Regelschleife (102) an die Anregungseinheit zurückkoppelt, und

Detektieren der Positionsänderung des Schwingerelements in einem System nach einem der Ansprüche 1 bis 13, wobei die Ausgangsspannung der Regelschleife auf eine Gleichtakteingangsspannung der Detektionsschaltung aufmoduliert wird.

**15.** Coriolis-Drehratensensor mit einem primären elektrostatisch anregbaren Schwingerelement und einem sekundären elektrostatisch anregbaren Schwingerelement, wobei der Coriolis-Drehratensensor zum Ansteuern des primären und/oder zum Rückstellen des sekundären Schwingerelements ein Verfahren nach Anspruch 14 durchführt.

**Claims**

**1.** System for reading out at least one position signal of a micromechanical capacitive sensor with at least one oscillating element that can be excited so as to move in an oscillating manner, comprising a detection circuit (100), the capacitive sensor (106) and a control loop (102),
wherein a first input connection of the detection circuit (100) is connected to at least one output connection of the capacitive sensor (106) and one output connection of the detection circuit (100) is connected with a loop filter of the control loop (102), wherein the control loop is operable to feed back a feedback voltage depending on an output voltage of the control loop (102) to a second input connection of the detection circuit (100), so that a feedback force is applied to the capacitive sensor (106),
wherein the detection circuit (100) comprises at least one further feedback branch ($R_{fb}$, $C_{fb}$) and is operable to modulate the output voltage of the control loop (102) onto an input common mode voltage of the detection circuit.

**2.** System according to claim 1, wherein the feedback voltage is applied to the positive input of an operational amplifier (108) which is connected to form a charge integrator.

**3.** System according to claim 2, wherein the further feedback branch has a parallel circuit comprising a feedback resistance element ($R_{fb}$) and a feedback capacitor ($C_{fb}$) and/or wherein the detection circuit (100) further has a compensation circuit (110) for compensating a change of the output voltage of the operational amplifier due to a displacement of the input common mode voltage.

**4.** System according to claim 3, wherein the compensation circuit (110) has a compensation capacity, which is connected to a first connection with the first input connection of the detection circuit and with its other connection with a capacitive compensation voltage.

**5.** System according to one of the preceding claims, wherein the detection circuit has a fully differential charge integrator (112) with two negative inputs for collecting the changes of capacity of two coupled differential capacities of the capacitive sensor, and wherein two further feedback branches are provided.

**6.** System according to claim 5, wherein each of the feedback branches ($R_{fb}$, $C_{fb}$) has a parallel circuit comprising a feedback resistance and a feedback capacitor.

**7.** System according to claim 5 or 6, wherein with each of both negative inputs a compensation circuit (110) for compensating a change of the output voltage of the operational amplifier (112) due to the displacement of the input common mode is connected.

8. System according to one of the claims 3 or 4 or 7, wherein for the automatic creation of a capacitive compensation voltage, a compensation adjustment circuit is provided, which detects the influence of a capacitive mis-reconciliation to the output voltage of the detection circuit.

9. System according to claim 8, wherein the control loop is a sigma-delta modulator and the compensation adjustment circuit further comprises:

a mixer for multiplication of the output voltage of the detection circuit with the output signal of the sigma-delta control loop, and
a low-pass filter (LPF), which is connected with an output connection of the mixer.

10. System according to claim 9, wherein the compensation adjustment circuit further comprises a controller, which corrects the amplitude of the feedback voltage in a manner that a mis-reconciliation kc is minimized.

11. System according to claim 3 or 7, wherein for providing of a capacitive compensation at least one compensation capacitor is charged with the feedback voltage and is connected via a discharge resistor with the first input connection of the detection circuit.

12. System according to claim 11, further comprising a switching unit (116) for the controlled discharge of the compensation capacitor depending on a change of the control loop.

13. System according to one of the preceding claims, wherein the detection circuit comprises a compensation resistance, which is connected with a first connection with the first input connection of the detection circuit and with its other connection with a resistive compensation voltage, and/or
wherein further at least one first and one second controlled switch (104) are provided, which separate the output connection of the sensor (106) from the input of the detection circuit (100) and connect it with the feedback voltage.

14. Method for controlling and time continuous analyzing of a micromechanical capacitive sensor with at least one oscillating element that can be excited so as to move in an oscillating manner and an electrostatic excitation unit comprising at least one capacity, wherein the method has the following steps:

operation of a capacitive sensor in a control loop, wherein the control loop for providing a feedback force depending on an output voltage of a control loop (102) feeds back to the excitation unit, and
detection of a displacement of the oscillating element in a system according to one of the claims 1 to 13, wherein the output voltage of the control loop is modulated onto an input common mode voltage of the detection circuit.

15. Coriolis rotation rate sensor with a primary electrostatically excitable oscillating element and a secondary electrostatically excitable oscillating element, wherein the Coriolis rotation rate sensor for controlling the primary and/or for feeding back the secondary oscillating element performs a method according to claim 14.

**Revendications**

1. Système de lecture d'au moins un signal de position d'un capteur capacitif micromécanique avec au moins un élément oscillant pouvant être excité de manière à fournir un mouvement d'oscillation, comprenant un circuit de détection (100), le capteur capacitif (106) et une boucle de régulation (102)
dans lequel une première borne d'entrée du circuit de détection (100) est connectée à au moins une borne de sortie du capteur capacitif (106) et une borne de sortie du circuit de détection (100) est connectée à un filtre de boucle de la boucle de régulation (102),
dans lequel la boucle de régulation est conçue pour renvoyer une tension de réaction vers une seconde borne d'entrée du circuit de détection (100) en fonction d'une tension de sortie de la boucle de régulation (102), de sorte qu'une force de réinitialisation est exercée sur le capteur capacitif (106),
dans lequel le circuit de détection (100) comprend au moins une autre branche de réaction ($R_{fb}$, $C_{fb}$) et est conçu pour moduler la tension de sortie de la boucle de régulation (102) sur une tension d'entrée en parallèle du circuit de détection.

2. Système selon la revendication 1, dans lequel la tension de réaction est appliquée au niveau de l'entrée positive d'un amplificateur opérationnel (108) connecté à un intégrateur de charge.

3. Système selon la revendication 2, dans lequel l'autre branche de réaction comprend un circuit parallèle constitué d'un élément de résistance de réaction ($R_{fb}$) et d'un condensateur de réaction ($C_{fb}$) et/ou
dans lequel le circuit de détection (100) présente en outre un circuit de compensation (110) permettant de compenser une modification de la tension de sortie de l'amplificateur opérationnel suite au décalage de la tension d'entrée en parallèle.

4. Système selon la revendication 3, dans lequel le circuit de compensation (110) présente une capacité de compensation qui est connectée à la première borne d'entrée du circuit de détection au niveau d'une première borne et à une tension de compensation capacitive au niveau de son autre borne.

5. Système selon l'une quelconque des revendications précédentes, dans lequel le circuit de détection présente un intégrateur de charge (112) entièrement différentiel avec deux entrées négatives permettant de détecter la modification de capacité de deux capacités différentielles couplées du capteur capacitif, et dans lequel deux autres branches de réaction sont prévues.

6. Système selon la revendication 5, dans lequel chacune des branches de réaction ($R_{fb}$, $C_{fb}$) présente un circuit parallèle constitué d'une résistance de réaction et d'un condensateur de réaction.

7. Système selon la revendication 5 ou 6, dans lequel un circuit de compensation (110) permettant de compenser une modification de la tension de sortie de l'amplificateur opérationnel (112) suite au décalage de la tension d'entrée en parallèle est connecté à chacune des deux entrées négatives.

8. Système selon la revendication 3 ou 4 ou 7, dans lequel un circuit d'ajustement de compensation qui détecte l'influence d'une discordance capacitive sur la tension de sortie du circuit de détection est prévu afin de générer automatiquement une tension de compensation capacitive.

9. Système selon la revendication 8, dans lequel la boucle de régulation est un modulateur sigma-delta et le circuit d'ajustement de compensation comprend en outre :

un mélangeur permettant de multiplier la tension de sortie du circuit de détection par le signal de sortie de la boucle de régulation sigma-delta et
un filtre passe-bas (LPF) connecté à une borne de sortie du mélangeur.

10. Système selon la revendication 9, dans lequel le circuit d'ajustement de compensation comprend en outre un régulateur qui corrige l'amplitude de la tension de réaction de sorte qu'une discordance kc est minimisée.

11. Système selon la revendication 3 ou 7, dans lequel au moins un condensateur de compensation est chargé avec la tension de réaction afin de fournir une compensation capacitive et est connecté à la première borne d'entrée du circuit de détection par l'intermédiaire d'une résistance de décharge.

12. Système selon la revendication 11, comprenant en outre une unité de commutation (116) permettant une décharge commandée du condensateur de compensation en fonction d'une modification de la boucle de régulation.

13. Système selon l'une quelconque des revendications précédentes, dans lequel le circuit de détection comprend une résistance de compensation qui est connectée à la première borne d'entrée du circuit de détection au niveau d'une première borne et à une tension de compensation résistive au niveau de son autre borne et/ou dans lequel au moins des premier et second interrupteurs commandés (104) sont en outre prévus, qui déconnectent la borne de sortie du capteur (106) de l'entrée du circuit de détection (100) et la connectent à la tension de réaction.

14. Procédé de commande et d'évaluation en continu d'un capteur capacitif micromécanique avec au moins un élément oscillant pouvant être excité de manière à fournir un mouvement d'oscillation et une unité d'excitation électrostatique comprenant au moins une capacité, dans lequel le procédé présente les étapes ci-dessous consistant à :

faire fonctionner le capteur capacitif dans une boucle de régulation, dans lequel la boucle de régulation renvoie à l'unité d'excitation une tension de réaction afin de fournir une force de réinitialisation en fonction d'une tension de sortie de la boucle de régulation (102), et
détecter la modification de position de l'élément oscillant dans un système selon l'une quelconque des revendications 1 à 13, dans lequel la tension de sortie de la boucle de régulation est modulée sur une tension d'entrée en parallèle du circuit de détection.

15. Capteur de vitesse angulaire à effet Coriolis avec un élément oscillant primaire pouvant être excité de manière électrostatique et un élément oscillant secondaire pouvant être excité de manière électrostatique, dans lequel le capteur de vitesse angulaire à effet Coriolis met en œuvre un procédé selon la revendication 14 afin de commander l'élément oscillant primaire et/ou de réinitialiser l'élément oscillant secondaire.

**Fig. 1**

**Fig. 2**

Fig. 3

**Fig. 4**

EP 3 047 233 B1

Fig. 5

*Fig. 6*

**Fig. 7**

**Fig. 8**

EP 3 047 233 B1

**Fig. 9**

Fig. 10

Fig. 11

*Fig. 12*

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012222225
- US 6253612 B1
- EP 2259019 A1
- US 2012076339 A1
- DE 102011005745 A1

**In der Beschreibung aufgeführte Nicht-Patentliteratur**

- **NORTHEMANN, T. ; MAURER, M. ; BUHMANN, A. ; HE, L. ; MANOLI, Y.** Excess Loop Delay compensated Electro-Mechanical Bandpass Sigma-Delta Modulator for Gyroscopes. *Eurosensors XXIII,* 2009, 1183-1186
- **SEEGER, J. I. ; JIANG, X. ; KRAFT, M. ; BOSER, B. E.** Sense Finger Dynamics in a Sigma-Delta Force-Feedback Gyroscope. *Proc. Tech. Dig. Solid-State Sensor and Actuator Workshop,* 2000, 296-299
- **CHERRY, J. A. ; SNELGROVE W.M.** Continuous-time Sigma-Delta modulators for high-speed A/D conversion. Kluwer Academic Publishers, 2000
- **NORTHEMANN, T ; MAURER, M. ; MANOLI, Y.** Compensation Technique for Capacitive Crosstalk in Continuous-Time Electro-Mechanical Sigma-Delta Modulators. *Proceedings of the Eurosensors Conference,* 2011, 1281-1284